# EUROPEAN PATENT APPLICATION

(11) **EP 3 855 323 A1**
(43) Date of publication of application: **28.07.2021**
(21) Application number: 21175059.1
(22) Date of filing: 20.05.2021
(51) Int. Cl.: G06F 16/332, G06F 16/36

(54) **METHOD AND APPARATUS FOR GENERATING CONVERSATION, ELECTRONIC DEVICE, AND STORAGE MEDIUM**

(30) Priority: 18.09.2020 CN 202010984320
(71) Applicant: Beijing Baidu Netcom Science and Technology Co., Ltd., Beijing 100085 (CN)
(72) Inventor: XU, Jun, Beijing, 100085 (CN); LEI, Zeyang, Beijing, 100085 (CN); NIU, Zhengyu, Beijing, 100085 (CN); WU, Hua, Beijing, 100085 (CN); WANG, Heifeng, Beijing, 100085 (CN)
(74) Representative: advotec.

(57) **Abstract**

The disclosure provides a method and an apparatus for generating a conversation, an electronic device, and a storage medium, belonging to a field of natural language processing technologies. A first expression corresponding to the input statement is obtained (101) from a conversational graph. The conversational graph includes expressions having association relationships therebetween and conversation target clusters having association relationships therebetween, and each conversation target cluster includes at least two expressions. A second expression associated with the first expression is obtained (102) from the conversational graph based on the association relationships of expressions and the association relationships of conversational target clusters in the conversational graph. A reply statement is generated (103) based on the second expression and the input statement.

## Description

### FIELD

The disclosure relates to a field of computer technologies and particularly to a field of natural language processing technologies, and relates to a method and an apparatus for generating a conversation, an electronic device, and a storage medium.

### BACKGROUND

A man-machine conversation is an important challenge of artificial intelligence. With the rise of the artificial intelligence in recent years, a research on the man-machine conversation gets hotter and hotter. The man-machine conversation brings a lot of convenience to life and saves manpower. Multiple conversation applications need to accomplish a conversation target in a multi-round conversation, such as recommending items.

Therefore, it is particularly important how to accomplish the conversation target during the man-machine conversation.

### SUMMARY

The disclosure provides a method and an apparatus for generating a conversation, an electronic device, and a storage medium, for generating a conversation with a clear and controllable target.

According to a first aspect, a method for generating a conversation is provided. The method includes: obtaining an input statement; obtaining a first expression corresponding to the input statement from a conversational graph, the conversational graph including expressions having association relationships therebetween and conversation target clusters having association relationships therebetween, and each conversation target cluster including at least two expressions; obtaining a second expression associated with the first expression from the conversational graph based on the association relationships of expressions and the association relationships of conversational target clusters in the conversational graph; and generating a reply statement based on the second expression and the input statement.

With the method for generating the conversation according to embodiments of the disclosure, the first expression corresponding to the input statement is obtained from the conversational graph. The conversational graph includes the expressions having the association relationships therebetween and the conversation target clusters having the association relationships therebetween. Each conversation target cluster includes the at least two expressions. The second expression associated with the first expression is obtained from the conversational graph based on the association relationships of expressions and the association relationships of conversational target clusters in the conversational graph. The reply statement is generated based on the second expression and the input statement. In this way, by using the conversational graph having the double-layer structure including a layer of conversation target clusters and a layer of expressions, the reply statement is generated based on the association relationships of conversation target clusters and the association relationships of expressions, such that a generated conversation has a clear and controllable conversation target, and the conversation efficiency is improved.

According to a second aspect, an apparatus for generating a conversation is provided. The apparatus includes: a first obtaining module, a second obtaining module, a third obtaining module, and a generating module. The first obtaining module is configured to obtain an input statement. The second obtaining module is configured to obtain a first expression corresponding to the input statement from a conversational graph. The conversational graph includes expressions having association relationships therebetween and conversation target clusters having association relationships therebetween. Each conversation target cluster includes at least two expressions. The third obtaining module is configured to obtain a second expression associated with the first expression from the conversational graph based on the association relationships of expressions and the association relationships of conversational target clusters in the conversational graph. The generating module is configured to generate a reply statement based on the second expression and the input statement.

With the apparatus for generating the conversation according to embodiments of the disclosure, the first expression corresponding to the input statement is obtained from the conversational graph. The conversational graph includes the expressions having the association relationships therebetween and the conversation target clusters having the association relationships therebetween. Each conversation target cluster includes the at least two expressions. The second expression associated with the first expression is obtained from the conversational graph based on the association relationships of expressions and the association relationships of conversational target clusters in the conversational graph. The reply statement is generated based on the second expression and the input statement. In this way, by using the conversational graph having the double-layer structure containing a layer of conversation target clusters and a layer of expressions, the reply statement is generated based on the association relationships of conversation target clusters and the association relationships of expressions, such that a generated conversation has a clear and controllable conversation target, and the conversation efficiency is improved.

According to a third aspect, an electronic device is provided. The electronic device includes: at least one processor and a memory. The memory is communicatively coupled to the at least one processor. The memory is configured to store instructions executable by the at least one processor. The at least one processor is caused to implement the method for generating the conversation according to any of embodiments of the disclosure when the instructions are executed by the at least one processor.

According to a fourth aspect, a non-transitory computer readable storage medium having computer instructions stored thereon is provided. The computer instructions are configured to cause a computer to execute the method for generating the conversation according to any of embodiments of the disclosure.

According to a fifth aspect, a computer program product containing computer programs is provided. When the computer programs are executed on a processor, the processor is caused to execute the method for generating a conversation according to any of embodiments of the disclosure.

According to embodiments of the disclosure, by using the conversational graph with a double-layer structure including a layer of conversation target clusters and a layer of expressions, the reply statement is generated based on the association relationships of conversation target clusters and the association relationships of expressions, such that a generated conversation has a clear and controllable conversation target, and the conversation efficiency is improved.

Other effects of the above-mentioned alternative implementations will be explained in the following with specific embodiments.

### BRIEF DESCRIPTION OF THE DRAWINGS

The accompanying drawings are used for better understanding the solution and do not constitute a limitation of the disclosure.
FIG. 1 is a flowchart illustrating a method for generating a conversation according to some embodiments of the disclosure.
FIG. 2 is a flowchart illustrating a method for generating a conversation according to some embodiments of the disclosure.
FIG. 3 is a schematic diagram illustrating edges connecting expressions in a conversational graph according to embodiments of the disclosure.
FIG. 4 is a flowchart illustrating a method for generating a conversation according to some embodiments of the disclosure.
FIG. 5 is a flowchart illustrating a method for generating a conversation according to some embodiments of the disclosure.
FIG. 6 is a flowchart illustrating a method for generating a conversation according to some embodiments of the disclosure.
FIG. 7 is a schematic diagram illustrating a conversational graph according to embodiments of the disclosure.
FIG. 8 is a block diagram illustrating an apparatus for generating a conversation according to embodiments of the disclosure.
FIG. 9 is a block diagram illustrating an electronic device for implementing a method for generating a conversation according to embodiments of the disclosure.

### DETAILED DESCRIPTION

Description will be made below to exemplary embodiments of the disclosure with reference to accompanying drawings, which includes various details of embodiments of the disclosure to facilitate understanding and should be regarded as merely examples. Therefore, it should be recognized by the skilled in the art that various changes and modifications may be made to the embodiments described herein without departing from the scope and spirit of the disclosure. Meanwhile, for clarity and conciseness, descriptions for well-known functions and structures are omitted in the following description.

Description will may be made below to a method and an apparatus for generating a conversation, an electronic device, and a storage medium according to embodiments of the disclosure with reference to accompanying drawings.

With the method for generating the conversation according to the disclosure, by using a conversational graph being a double-layer structure (i.e., a layer of conversation target clusters and a layer of expressions), a reply statement is generated based on association relationships of conversation target clusters and association relationships of expressions. A generated conversation is controllable and has a clear conversation target, and the conversation efficiency is improved.

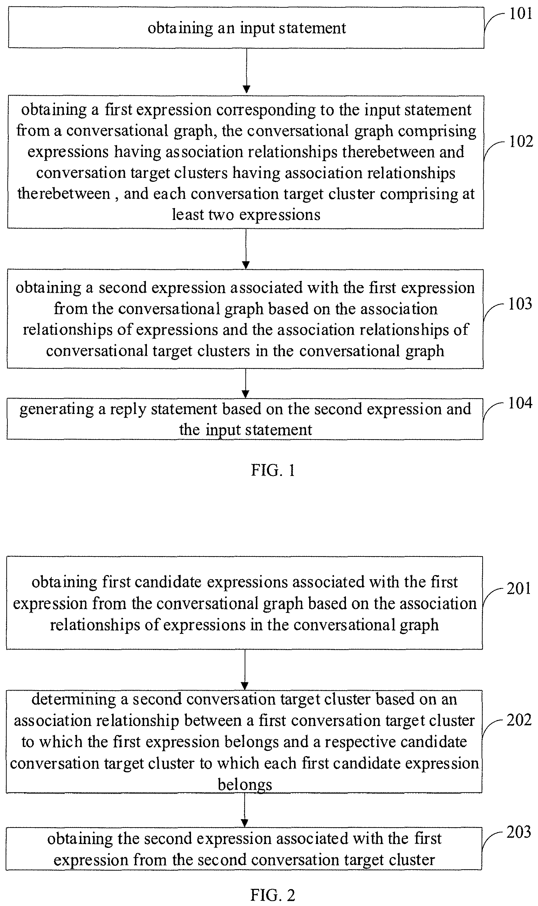

FIG. 1 is a flowchart illustrating a method for generating a conversation according to some embodiments of the disclosure.

The method for generating the conversation may be executed by an apparatus for generating a conversation. The apparatus may be integrated into an electronic device to generate a controllable conversation with a clear conversation target.

As illustrated in FIG. 1, the method for generating the conversation includes the following.

At block 101, an input statement is obtained.

In the disclosure, the input statement may be a speech statement inputted by a user. For example, the speech statement input by the user is "What's the weather like today?".

At block 102, a first expression corresponding to the input statement is obtained from a conversational graph. The conversational graph includes expressions having association relationships therebetween and conversation target clusters having association relationships therebetween, and each conversation target cluster includes at least two expressions.

The first expression corresponding to the input statement is obtained from the conversational graph after the input statement is obtained. The conversational graph is pre-established. In the conversational graph, each expression may be regarded as a node, and an edge connecting two nodes may indicate an association relationship of two expressions.

For the conversational graph including the multiple conversation target clusters and the multiple expressions, there are association relationships between the conversation target clusters and association relationships between the expressions, where each conversation target cluster includes two or more expressions. The expressions included in a conversation target cluster correspond to a common conversation target. That is, each conversation target cluster corresponds to a respective conversation target.

For example, there are two conversation target clusters H and T. The conversation target cluster H includes multiple expressions related to the weather, such as "temperature", "windy", "heavy rain", "very hot", "heatstroke" and "high temperature". There is an association relationship between the expression "high temperature" and the expression "heatstroke", and there is also an association relationship between the expression "temperature" and the expression "high temperature". The conversation target cluster T includes multiple expressions related to travel, such as "airplane", "train", "self-driving", "rainy", "weather" and "sun protection". There is an association relationship between the expression "weather" and the expression "rainy", as well as an association relationship between the expression "weather" and the expression "sun protection". In addition, there are also some association relationships between the conversation target cluster H and the conversation target cluster T. For example, there is an association relationship between the expression "heavy rain" of the conversation target cluster H and the expression "rainy" of the conversation target cluster T, an association relation between the expression "heavy rain" of the conversation target cluster H and the expression "weather" of the conversation target cluster T, and an association relationship between the expression "high temperature" of the conversation target cluster H and the expression "sun protection" of the conversation target cluster T.

In some examples, the conversational graph is a double-layer structure, i.e., one layer is the conversation target clusters, and the other layer is the expressions. The layer of expressions is considered as a lower layer, while the layer of conversation target clusters is considered as an upper layer. That is, the conversational graph is hierarchical.

In addition, an association relationship of expressions means that all these expressions appear in a conversation and have a certain relationship, and an association relationship of conversation target clusters means that there are association relationships between expressions of these conversation target clusters.

For obtaining the first expression, a keyword may be extracted from the input statement, and an expression having a highest similarity degree with the keyword may be obtained from the conversational graph as the first expression. In this way, the input statement is mapped to a node in the conversational graph.

For example, in the input statement "What's the weather like today?", the keyword is "weather". Expressions corresponding to "weather" may be obtained from the conversational graph.

At block 103, a second expression associated with the first expression is obtained from the conversational graph based on the association relationships of expressions in the conversational graph and the association relationships of conversational target clusters.

After the first expression is determined, a conversation target cluster to which the first expression belongs may be determined by querying the conversational graph. The second expression may be selected based on the association relationships between expressions contained in the determined conversation target cluster to which the first expression belongs.

In an example, an expression may be randomly selected from expressions that have association relationships with the first expression and contained in the determined conversation target cluster to which the first expression belongs, as the second expression. In another example, if the determined conversation target cluster to which the first expression belongs includes an expression having an association relationship with the first expression, and the number of association relationships between this expression and other expressions contained in the determined conversation target cluster is the maximum, this expression is determined as the second expression.

At block 104, a reply statement is generated based on the second expression and the input statement.

The reply statement may be generated based on the second expression and expressions contained in the input statement, after the second expression is obtained.

In detail, the second expression and the input statement may be inputted to a generation model, and the reply statement may be generated by the generation model. For example, the second expression and the input statement are inputted into a Memory-Based Sequence-to-Sequence model, to generate the reply statement.

After the user re-enters a new statement based on the reply statement, a new reply statement can be generated with the above method based on the newly entered statement. In this way, a multi-round conversation may be generated.

The second expression for generating the reply statement is an expression selected from the conversational graph that is the two-layer structure, i.e., the layer of conversation target clusters and the layer of expressions. The reply statement generated based on the second expression has a clear conversation target, is controllable and hierarchical.

With the method of the disclosure, the first expression corresponding to the input statement is obtained from the conversational graph. The conversational graph includes the expressions having the association relationships therebetween and the conversation target clusters having the association relationships therebetween. Each conversation target cluster includes at least two expressions. The second expression associated with the first expression is obtained from the conversational graph based on the association relationships of expressions and the association relationships of conversational target clusters in the conversational graph. The reply statement is generated based on the second expression and the input statement. In this way, since the relay statement is generated based on the association relationships of the expressions and conversation target clusters in the conversational graph being the double-layer structure (i.e., a layer of conversation target clusters and a layer of expressions), the generated conversation has a clear conversation target and is controllable, and the conversation efficiency is improved.

In order to generate the conversation having the clear conversation target, for obtaining the second expression associated with the first expression from the conversational graph, multiple candidate expressions associated with the first expression may be obtained from the lower layer of the conversational graph, respective conversation target clusters to which the candidate expressions belong are determined from the upper layer of the conversational graph, a conversation target cluster is determined based on the conversation target cluster to which the first expression belongs and respective conversation target clusters, and the second expression is obtained from the determined conversation target cluster. The above will be described below with reference to FIG. 2. FIG. 2 is a flowchart illustrating a method for generating a conversation according to some embodiments of the disclosure.

As illustrated in FIG. 2, obtaining the second expression associated with the first expression from the conversational graph based on the association relationships of conversation target clusters and the association relationship of expressions in the conversational graph includes the following.

At block 201, first candidate expressions associated with the first expression are obtained from the conversational graph based on the association relationships of expressions in the conversational graph.

In some examples, there are multiple association relationships between the expressions in the conversational graph. Multiple expressions associated with the first expression may be determined from the conversational graph based on association relationships of expressions. These determined expressions are called as first candidate expressions for distinguishing. The first candidate expressions may correspond to the same conversation target cluster as the first expression, or to different conversation target clusters from the first expression.

In an example, all the expressions having association relationships with the first expression in the conversational graph may be determined as the first candidate expressions. In another example, some of the expressions having association relationships with the first expression in the conversational graph may be determined as the first candidate expressions. For example, some of expressions having a high matching degree with respect to the input statement may be selected from all the expressions associated with the first expression as the first candidate expressions.

At block 202, a second conversation target cluster is determined based on association relationships between a first conversation target cluster to which the first expression belongs and candidate conversation target clusters to which the first candidate expressions belong.

The conversation target cluster to which the first expression belongs (also called as the first conversation target cluster) and the conversation target clusters to which the first candidate expressions belong (also called as the candidate conversation target clusters) may be determined based on the expressions included in each conversation target cluster of the conversational graph. Therefore, the multiple first candidate expressions may be obtained from the lower layer of the conversational graph, and the multiple candidate conversation target clusters may be determined from the upper level of the conversational graph.

After the first conversation target cluster and the candidate conversation target clusters are determined, the second conversation target cluster may be obtained from the candidate conversation target clusters based on the association relationships between the first conversation target cluster and each candidate conversation target cluster. A conversation target corresponding to the second conversation target cluster may be considered as a conversation target of a current conversation.

In an example, a candidate conversation target cluster having a closest distance to the first conversation target cluster may be selected from the candidate conversation target clusters, as the second conversation target cluster. In another example, if the number of association relationships between expressions contained in a candidate conversation target cluster and expressions contained in the first conversation target cluster is the maximum, the candidate conversation target cluster is determined as the second conversation target cluster. In still another example, a candidate conversation target cluster having a highest association degree with respect to the first conversation target cluster is determined as the second conversation target cluster.

In yet another example, a candidate conversation target cluster having a smallest distance to a previous second conversation target cluster for generating the last conversation is determined as a current second conversation target cluster. Therefore, the currently generated conversation is related to the previously generated conversation, which not only allows the generated conversation to have the clear conversation target, but also allows the generated conversation coherent.

In yet another example, a candidate conversation target cluster that is most frequently selected as a second conversation target cluster is determined as the second conversation target cluster. The candidate conversation target cluster that has been selected as the second conversation target cluster for a long time is determined as the second conversation target cluster for generating the current conversation, which allows the generated conversation to have an accurate conversation target.

At block 203, the second expression associated with the first expression is obtained from the second conversation target cluster.

After the second conversation target cluster is determined, the second expression is determined from the second conversation target cluster. In an example, if the number of association relationships between an expression with other expressions contained in the second conversation target cluster is the maximum, this expression is determined as the second expression associated with the first expression. In another example, if an expression has a highest association degree with the first expression, this expression is determined as the second expression associated with the first expression.

For obtaining the second expression associated with the first expression from the conversational graph based on the association relationship of conversation target clusters and the association relationship of expressions in the conversational graph, the multiple first candidate expressions are obtained from the expressions at the lower layer of the conversational graph, and the first conversation target cluster as well as the multiple candidate conversation target clusters are determined from the conversation target clusters at the upper layer of the conversational graph. The second expression is determined based on the multiple first candidate expressions at the lower layer and the multiple candidate second conversation target clusters at the upper layer, which allows the generated conversation to have a clear conversation target and allows the generated conversation to be hierarchical.

In practice, the expressions appear in a certain order in the conversation. For improving coherence of the generated conversation, the association relationships of expressions include directions and first weights of edges connecting the expressions. Obtaining the multiple first candidate expressions associated with the first expression from the conversational graph based on the association relationship of expressions in the conversational graph may include obtaining the first candidate expressions based on the directions and the first weights of the edges connecting the expressions.

In some examples, a direction of an edge connecting the expressions is used to indicate an appearance order of the expressions in an existing conversational statement. The appearance orders of the expressions are different for different conversations due to different conversation habits. There are two opposition directions for an edge connecting two expressions. For example, between an expression a and an expression b, there is an edge pointing from the expression a to the expression b, and an edge pointing from the expression b to the expression a.

The first weight which is a weight of the edge, is used to indicate an association degree between two expressions in the direction of the edge. The larger the first weight, the greater the association degree between the two expressions in the direction of the edge is.

For obtaining the multiple first candidate expressions associated with the first expression from the conversational graph, multiple expressions to which the first expression points are obtained from the conversational graph based on the directions of the edges connecting the expressions, and first weights of the edges in the directions from the first expression to the multiple expressions are determined. Expressions corresponding to the first weights greater than a preset first threshold are selected as the multiple first candidate expressions.

In other words, for each first candidate expression, an edge pointing from the first expression to the first candidate expression exits therebetween, and the first weight of the edge is greater than the first threshold.

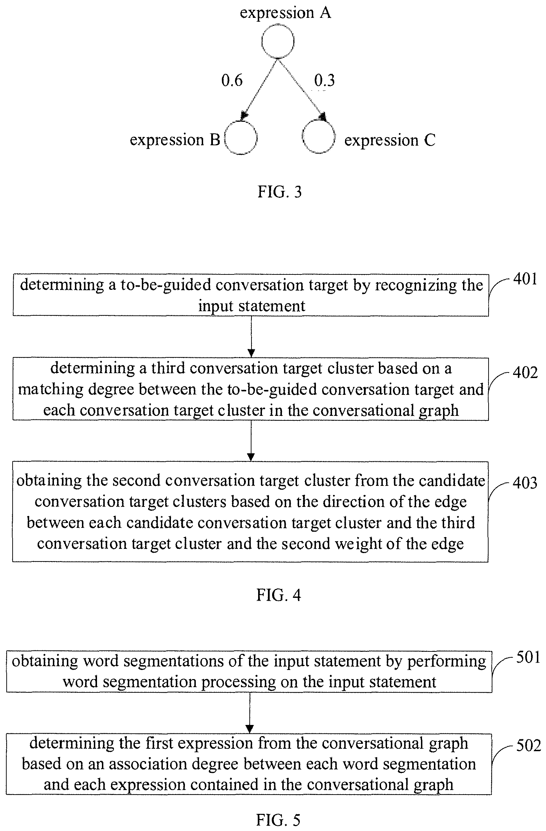

FIG. 3 is a schematic diagram illustrating edges connecting expressions in a conversational graph according to embodiments of the disclosure. As illustrated in FIG. 3, circles represent nodes corresponding to expressions. The expression A points to the expression B, and the weight of the edge is 0.6. The expression A points to the expression C, and the weight of the edge is 0.3. In a case that the expression A is the first expression and the preset first threshold is 0.4, the expression B may be selected as the first candidate expression of the expression A.

With the method of the disclosure, when the association relationships of expressions include the directions and the first weights of the edges connecting the expressions, for obtaining the multiple first candidate expressions associated with the first expression from the conversational graph based on the association relationships of the expressions in the conversational graph, the multiple first candidate expressions are obtained from the conversational graph based on the directions and the first weights of the edges connecting the expressions. The direction of the edge connecting the first expression and a first candidate expression is from the first expression to the first candidate expression, and the first weight of the edge is greater than the preset first threshold. Not only the directions of the edges connecting the expressions but also the first weights of the edges are considered, which improves the accuracy of the obtained first candidate expression. Further, determining the second expression based on the candidate conversation target clusters to which the first candidate expressions belong and generating the reply statement based on the second expression may improve the accuracy of the generated conversation.

As mentioned above, the first candidate expressions are obtained based on the directions and the first weights of the edges connecting the expressions. In some examples, the association relationships of expressions in the conversational graph may include only the directions of the edges connecting the expressions. In this case, the first candidate expressions may be determined based on the directions of the edges connecting the expressions and the number of the edges.

In detail, for obtaining the second expression associated with the first expression from the conversational graph, multiple expressions being pointed to by the first expression obtained from the conversational graph based on the directions of the edges connecting the expressions, and an expression having the number of edges greater than a preset second threshold is selected as a first candidate expression.

In other words, for each first candidate expression, the direction of an edge connecting the first candidate expression and the first expression is that the first expression points to the first candidate expression, and the number of edges corresponding to the first candidate expression is greater than a second threshold.

The number of edges corresponding to the first candidate expression refers to a sum of the number of edges pointing from other expressions to the first candidate expression and the number of edges pointing from the first candidate expression to other expressions.

In some examples, if an expression is pointed to by the first expression and the number of edges pointing from this expression to other expressions is greater than the second threshold, this expression can be selected as the first candidate expression. That is, if an expression is pointed to by the first expression and the number of out-edges of this expression is greater than the second threshold, this expression is determined as the first candidate expression.

For example, the first expression is the expression F, there is an association relationship between the expression F and the expression S, as well as an association relationship between the expression F and the expression T, the expression S corresponds to two edges pointing from the expression S to other expressions, the expression T corresponds to five edges pointing from the expression T to other expressions, and the second threshold is 2. The expression T is determined as the first candidate expression of the expression F.

With the method of the disclosure, when the association relationships of expressions include the directions of the edges connecting the expressions, for obtaining the multiple first candidate expressions associated with the first expression from the conversational graph based on the association relationships of the expressions in the conversational graph, the multiple first candidate expressions associated with the first expression are obtained from the conversational graph based on the directions of the edges connecting the expressions and the number of the edges. The direction of the edge between each first candidate expression and the first expression is from the first expression to the first candidate expression, and the number of edges corresponding to each first candidate expression is greater than the second threshold. In selecting the first candidate expressions based on the directions and the number of edges connecting the expressions, the expressions being pointed to by the first expression, as well as the association relationships between the pointed expression and other expressions are considered, to improve the accuracy of determining the first candidate expressions and improve the accuracy of the generated conversation.

In some examples, after the multiple first candidate expressions associated with the first expression in the conversational graph are obtained, the second expression may be determined based on the number of selecting times of each expression.

In detail, multiple second candidate expressions associated with the first expression are obtained from the conversational graph based on the association relationships of the expressions in the conversational graph. In an example, the second candidate expression may be an expression that is pointed to by the first expression through the edge from the conversational graph. In another example, the second candidate expression may include all expressions associated with the first expression in the conversational graph, including expressions being pointed to by the first expression through the edges and expressions pointing to the first expression through the edges.

The number of times of selecting each expression in the conversational graph to generate the reply statement in a current generation conversation process and the number of times of selecting each expression to generate the reply statement in a previous conversation generation process may be recorded. After the second candidate expressions are determined, the first candidate expressions are obtained from the second candidate expressions based on the number of times of selecting each second candidate expression.

In an example, a second candidate expression corresponding to the smallest number of times of being selected in a same round of conversation generation process may be taken as the second expression. In another example, a second candidate expression corresponding to the largest number of times of being selected in a previous conversation generation process may be taken as a first candidate expression.

With the method of the disclosure, for obtaining the first candidate expressions associated with the first expression from the conversational graph based on the association relationships of expressions in the conversational graph, the second candidate expressions associated with the first expression are obtained from the conversational graph based on the association relationships of expressions in the conversational graph, and the first candidate expressions are obtained from the second candidate expressions based on the number of times of selecting each second candidate expression. Therefore, the first candidate expressions are obtained based on the numbers of selecting times corresponding to the second candidate expressions associated with the first expression, and the accuracy of the generated statement is improved.

In determining the second conversation target cluster based on the association relationships between the first conversation target cluster to which the first expression belongs and the candidate conversation target clusters to which the first candidate expressions belong, since each first candidate expression is associated with the first expression and each first candidate expression may belong to the same conversation target cluster as the first expression or different conversation target clusters from the first expression, if a candidate conversation target cluster to which a candidate expression belongs is the first conversation target cluster (that is, there is a candidate expression belonging to the first conversation target cluster in the multiple first candidate expressions), the first conversation target cluster may be determined as the second conversation target cluster.

When one of the multiple candidate conversation target clusters corresponding to the multiple first candidate expressions is the same with the first conversation target cluster, the first conversation target cluster can be regarded as the second conversation target cluster, i.e., the second conversation target cluster is the same as the first conversation target cluster.

With the method of the disclosure, for determining the second conversation target cluster based on the association relationships between the first conversation target cluster to which the first expression belongs and the candidate conversation target clusters to which the first candidate expressions belong, it is determined that the second conversation target cluster is the same as the first conversation target cluster, when a candidate conversation target cluster to which one of the first candidate expressions belongs is the first conversation target cluster. In this way, when there is a first candidate expression belongs to the first conversation target cluster of the first expression, the first conversation target cluster is taken as the second conversation target cluster. In this case, obtaining the second expression associated with the first expression from the second conversation target cluster, the relevance between the second expression and the first expression is improved, and coherence of the generated conversation is increased.

In some examples, the association relationships of conversation target clusters include directions and second weights of edges connecting the conversation target clusters. For determining the second conversation target cluster, the second conversation target cluster may be obtained from the multiple candidate conversation target clusters based on the directions and the second weights of the edges connecting the conversation target clusters.

There may be none, one or two edges between two conversation target clusters. In a case that there are two edges connecting the conversation target clusters, directions of these two edges are opposite to each other. The greater the second weight of the edge connecting the two conversation target clusters, the greater the association degree of conversation targets between the two conversation target clusters is.

For determining the second conversation target cluster, one or more candidate conversation target clusters being pointed to by the first conversation target cluster may be obtained from the candidate conversation target clusters based on the directions of the edges connecting the conversation target clusters, the second weights of the edges pointing from the first conversation target cluster to the one or more candidate conversation target clusters may be obtained, and a candidate conversation target cluster corresponding to the second weight greater than a preset third threshold is selected as the second conversation target cluster. In some examples, more than one second conversation target cluster may be determined.

In other words, an edge pointing from the first conversation target cluster to the second conversation target cluster exits between the first conversation target cluster and the second conversation target cluster, and the second weight of the edge is greater than the third threshold.

With the method of the disclosure, in a case that the association relationships of the conversation target clusters include the directions and the second weights of the edges connecting the conversation target clusters, for determining the second conversation target cluster, the second conversation target cluster is obtained from the candidate conversation target clusters based on the direction and the second weight of the edge connecting the first conversation target cluster and each candidate conversation target cluster. An edge pointing from the first conversation target cluster to the second conversation target cluster exists between the first conversation target cluster and the second conversation target cluster, and the second weight of the edge is greater than the third threshold. By determining the second conversation target cluster based on the direction and the second weight of the edge connecting the first conversation target cluster and each candidate conversation target cluster, not only an appearance order of conversation targets of the conversation target clusters in the conversation is considered, but also the association degree is considered. In this way, the reply statement generated based on the determined second conversation target cluster allows the generated conversation to have a clear conversation target, to be hierarchic and controllable.

In practical, conversation targets of adjacent statements between people and people are generally the same or similar. Based on this, the association relationships of conversation target clusters include the directions and the second weights of the edges connecting the conversation target clusters, and each conversation target cluster corresponds to a respective conversation target. For determining the second conversation target cluster based on the association relationships between the first conversation target cluster to which the first expression belongs and the candidate conversation target clusters to which the first candidate expressions belong, a to-be-guided conversation target may be determined based on the input statement, and the second conversation target cluster is determined based on the to-be-guided conversation target.

The above will be described blow with reference to FIG. 4. FIG. 4 is a flow chart illustrating a method for generating a conversation according to some embodiments of the disclosure.

As illustrated in FIG. 4, determining the second conversation target cluster based on the association relationships between the first conversation target cluster to which the first expression belongs and the candidate conversation target clusters to which the first candidate expressions belong includes the following.

At block 401, a to-be-guided conversation target is determined by recognizing the input statement.

In an example, semantic analysis may be performed on the input statement to determine a to-be-guided conversation target currently corresponding to the input statement. In another example, a keyword may be extracted from the input statement, and the to-be-guided conversation target currently corresponding to the input statement is determined based on the keyword. The to-be-guided conversation target may be understood as a conversation target corresponding to the input statement.

At block 402, a third conversation target cluster is determined based on a matching degree between the to-be-guided conversation target and each conversation target cluster in the conversational graph.

In order to generate a conversation with a clear conversation target, a conversation target cluster corresponding to a conversation target that has a high matching degree with respect to the to-be-guided conversation target may be selected from the conversational graph.

In detail, the matching degree between the to-be-guided conversation target and a respective conversation target corresponding to each conversation target cluster in the conversational graph is calculated, and a conversation target cluster corresponding to the highest matching degree is taken as the third conversation target cluster. Therefore, the conversation target cluster corresponding to the to-be-guided conversation target that corresponds to the input statement is determined from the conversation target clusters of the conversational graph.

At block 403, the second conversation target cluster is obtained from the candidate conversation target clusters based on the direction and the second weight of the edge connecting each candidate conversation target cluster and the third conversation target cluster.

After the third conversation target cluster is determined, the second conversation target cluster is obtained from the candidate conversation target clusters based on the directions and the second weights of the edges connecting the candidate conversation target clusters and the third conversation target cluster.

The detailed method is similar to the method for determining the second target conversation cluster based on the directions and the second weights of the edges connecting the first conversation target cluster and the candidate conversation target clusters described above, which is not elaborated herein.

It is to be noted that, if the candidate conversation target clusters include a conversation target cluster that is the same as the third conversation target cluster, the third conversation target cluster may be taken as the second conversation target cluster.

With the method of the disclosure, the to-be-guided conversation target is determined by recognizing the input statement, and the third conversation target cluster corresponding to the to-be-guided conversation target is determined. The second conversation target cluster is obtained from the candidate conversation target clusters based on the directions and the second weights of the edges connecting the candidate conversation target clusters and the third conversation target cluster. The conversation target of the determined second conversation target cluster is related to the to-be-guided conversation target corresponding to the input statement. In this case, the reply statement generated based on the second expression obtained from the second conversation target cluster is the same as or related to the conversation target of the input statement. The generated conversation has a clear conversation target and has strong coherence.

It is to be noted that, besides the above-mentioned methods, the second conversation target cluster may also be determined based on a distance between each candidate conversation target cluster and the first conversation target cluster. The second conversation target cluster may be determined based on a distance between each candidate conversation target cluster and a previous conversation target cluster. The second conversation target cluster may be determined based on a distance between each candidate conversation target cluster and a conversation target cluster that is most frequently selected for generating a conversation. In practice, one or more of the above methods may be selected to determine the second conversation target cluster.

A method illustrated in FIG. 5 may also be used to obtain the first expression corresponding to the input statement from the conversational graph. FIG. 5 is a flowchart illustrating a method for generating a conversation according to some embodiments of the disclosure.

As illustrated in FIG. 5, obtaining the first expression corresponding to the input state from the conversational graph may include the following.

At block 501, word segmentations of the input statement are obtained by performing word segmentation processing on the input statement.

A dictionary may be used, and expressions contained in the dictionary may be matched with character strings contained in the input statement, to perform the word segmentation processing on the input statement and obtain respective segmentation words contained in the input statement.

At block 502, the first expression is determined from the conversational graph based on an association degree between each word segmentation and each expression contained in the conversational graph.

After the word segmentations included in the input statement are obtained, the association degree between each word segmentation and each expression contained in the conversational graph is obtained, and the first expression corresponding to the input statement is determined based on the association degrees. The association degree is used to indicate the association degree between two expressions.

For obtaining the association degree between each word segmentation and each expression contained in the conversational graph, the association degree may be determined based on appearance frequency of each word segmentation and each expression in existing articles and conversations. The greater the appearance frequency, the greater the association degree between the word segmentation and the expression is.

A similarity degree between a word segmentation and word segmentations contained in the conversational graph may be calculated. The greater the similarity degree, the greater the association degree is. For example, the similarity degree between a word segmentation "weather" and an expression "weather" contained in the conversational graph is the highest, and the word segmentation "weather" is consistent to the expression "weather".

After an expression contained in the conversational graph and having the highest association degree with each word segmentation is determined based on the word segmentations in the input statement, one of the expressions is selected as the first expression. For example, the first expression may be randomly selected from the expressions, or the first expression may have the highest association degree with the input statement.

With the method of the disclosure, for obtaining the first expression corresponding to the input statement from the conversational graph, the word segmenting process is performed on the input statement, the association degree between each word segmentation of the input statement and each expression of the conversational graph is determined, and the first expression corresponding to the input statement is determined from the conversational graph. The method not only realizes the mapping of the input statement into the conversational graph, but also improve the accuracy by determining the first expression based on each word segmentation of the input statement.

In order to improve the accuracy of mapping the input statement to the expressions at the lower layer of the conversational graph, multiple candidate expressions may be obtained based on the association degrees between each word segmentation and the expressions of the conversational graph. The first expression is determined based on the similarity degree between each candidate expression and the input statement.

In detail, the association degree between each word segmentation of the input statement and each expression of the conversational graph is calculated, and a preset number of expressions having high association degrees with respect to each word segmentation may be selected as the candidate expressions, to obtain the multiple third candidate expressions. The association degree between two expressions is used to indicate a possibility that these two expressions appear in the same conversation. The greater the association degree, the greater the possibility is.

For calculating the similarity degree between each third candidate expression and the input statement after the multiple third candidate expression are obtained, the similarity degree may be calculated based on a word vector of each third candidate expression and a vector corresponding to the input statement. A third candidate expression having a highest similarity degree with respect to the input statement is selected as the first expression corresponding to the input statement.

With the method of the disclosure, for determining the first expression corresponding to the input statement from the conversational graph based on the association degree between each word segmentation and each expression of the conversational graph, the first expression may be determined from the multiple third candidate expressions based on the similarity degree between the input statement and each third candidate expression obtained from the conversational graph. The accuracy of mapping the input statement to expressions at the lower layer of the conversational graph is improved.

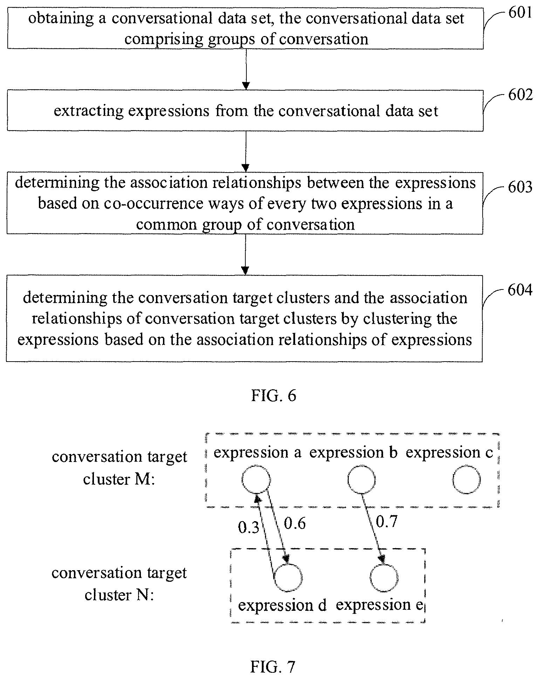

Before obtaining the first expression corresponding to the input statement from the conversational graph, the conversational graph may be generated based on a conversational data set. The above will be described below with reference to FIG. 6. FIG. 6 is a flowchart illustrating a method for generating a conversation according to some embodiments of the disclosure.

As illustrated in FIG. 6, before obtaining the first expression, the method also includes the following.

At block 601, a conversational data set is obtained. The conversational data set includes multiple groups of conversation.

A large amount of conversational data between people may be collected. These conversational data form a set to obtain the conversational data set. The conversational data set includes multiple groups of conversation. Each group of conversation may include multiple conversational statements. The conversation target or theme of each conversation group may be the same or different.

At block 602, expressions are extracted from the conversational data set.

The word segmentation processing may be performed on each statement in each group of conversation contained in the conversational data set to obtain the expressions in the group of conversation. A large number of expressions may be obtained based on the expressions in each group of conversation.

Syntactic analysis may also be performed on each conversation in the conversational data set. For example, a part of speech of each expression and a dependency relationship between expressions are determined, and a syntax tree corresponding to each conversation is obtained. The dependency relationship between expressions is described in the syntax tree. One or more expressions are selected from a root node of the syntax tree corresponding to each conversation, and the one or more selected expressions are taken as expressions corresponding to each conversation.

The expressions corresponding to each conversation are obtained by determining the syntax tree for each conversation, and the accuracy of the extracted expressions is improved.

At block 603, the association relationships of expressions are determined based on a co-occurrence way of every two expressions in a common group of conversation.

Co-occurrence ways of every two of expressions extracted from the conversational data set in the common group of conversation are recorded.

The co-occurrence way includes the co-occurrence times, an appearance order of the two co-occurring expressions in the common conversation, and a distance between the two co-occurring expressions in the common conversation. When the co-occurrence times is greater than 0, these two expressions are related to each other, and the direction of the edge connecting these two expressions is determined based on the appearance order of these two expressions in the conversation. For example, if the expression m appears prior to the expression n in a group of conversation, it may be considered that there is an edge between the expression m and the expression n, and the direction of the edge points from the expression m to the expression n.

Two expressions being far away from each other in a common conversation means that the association degree therebetween is small. Two expressions appearing in adjacent statements in a group of conversation means that the association degree therebetween is high. If two expressions appear in two separate statements of a group of conversation respectively, it may be considered that the two expressions are associated with each other, but the association degree is lower than that of the two expressions appearing in the adjacent statements.

In other words, the association degrees between every two expressions may be determined based on the co-occurrence way of the two expressions in a group of conversation. The co-occurrence way includes the direction of the edge connecting the two expressions, and the weight of the edge. The weight of the edge corresponds to the association degree. For example, the weight of the edge is in proportion to the association degree. The higher the association degree, the higher the weight is.

At block 604, the conversation target clusters and the association relationships of conversation target clusters are determined by clustering the expressions based on the association relationships of expressions.

After the association relationships of expressions are obtained, multiple word segmentations may be clustered based on the association relationship of expressions. In detail, if the weight of an edge connecting two expressions is greater than a preset weight threshold, these two expressions are clustered together into a conversation target cluster, and multiple conversation target clusters and the association relationships of conversation target clusters are obtained. Each conversation target cluster includes multiple expressions.

In clustering the expressions, a K-means clustering method or other methods may be adopted, which is not be elaborated herein.

By clustering expressions having a relatively high association degree therebetween into the same conversation target cluster, all expressions associated with a common conversation target are clustered into a cluster. For generating the conversation based on the conversational graph, the generated conversation is about the common conversation target, and the conversation efficiency is improved.

For determining the association relationships of conversation target clusters, the direction and the weight of the edge connecting two conversation target clusters may be determined based on the directions and weights of edges connecting expressions of every two conversation target clusters.

In detail, if an expression of a conversation target cluster points to an expression of another conversation target cluster, the direction of the edge connecting the two conversation target clusters may be determined, and the weight of the edge in the direction can be determined. For example, a sum of weights in the same direction is determined as the weight between the two conversation target clusters in the direction.

FIG. 7 is a schematic diagram illustrating a conversational graph according to embodiments of the disclosure. As illustrated in FIG. 7, the conversation target cluster M includes an expression a, an expression b and an expression c; and the conversation target cluster N includes an expression d and an expression e. There are two edges connecting the expression a and the expression d. One edge points from the expression a to the expression d, and a weight of the edge in the direction is 0.6. The other edge points from the expression d to the expression a, and a weight of the edge in the direction is 0.3. There is an edge between the expression b and the expression e. The direction of the edge is from the expression b to the expression e, and the weight of the edge in the direction is 0.7.

With the above method, in the direction pointing from the conversation target cluster M to the conversation target cluster N, the weight between the two conversation target clusters is a sum (i.e., 1.3) of the weight 0.6 of the edge pointing from the expression a to the expression d and the weight 0.7 of the edge pointing from the expression b to the expression e. In the direction where the conversation target cluster N points to the conversation target cluster M, the weight between the two conversation target clusters is the weight 0.3 of the edge pointing from the expression d pointing to the expression a.

A double-layer and hierarchical conversational graph containing the expressions and the conversation target clusters may be generated after the association relationships of expressions and the association relationships of conversation target clusters are obtained.

With the method of the disclosure, before the first expression corresponding to the input statement is obtained from the conversational graph, multiple expressions may be extracted from the conversational data set. The association relationships of expressions may be determined based on the co-occurrence way of every two expressions in the same group of conversation. The multiple expressions may be clustered based on the association relationships of expressions to determine the multiple conversation target clusters and the association relationships of conversation target clusters. In this way, the conversational graph having the double-layer structure may be generated based on the conversational data set. In addition, the hierarchical conversation with a clear conversation target and strong coherence may be generated based on the hierarchical conversational graph. The conversation efficiency is improved.

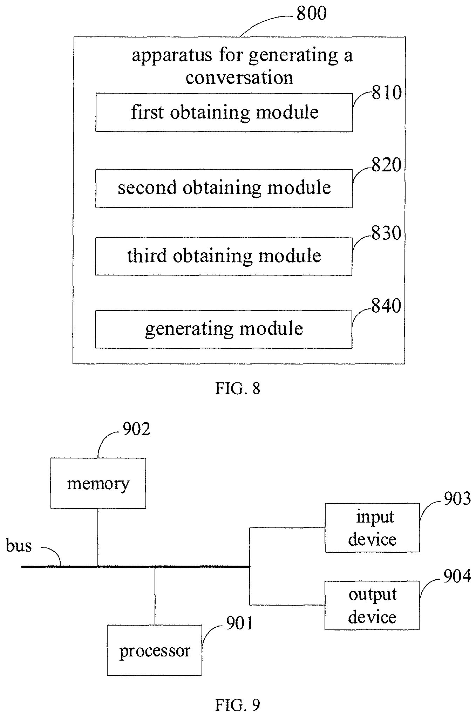

To achieve the above embodiments, embodiments of the disclosure provide an apparatus for generating a conversation. FIG. 8 is a block diagram illustrating an apparatus for generating a conversation according to embodiments of the disclosure.

As illustrated in FIG. 8, the apparatus 800 for generating the conversation includes: a first obtaining module 810, a second obtaining module 820, a third obtaining module 830, and a generating module 840.

The first obtaining module 810 is configured to obtain an input statement. The second obtaining module 820 is configured to obtain a first expression corresponding to the input statement from a conversational graph. The conversational graph includes expressions having association relationships therebetween and conversation target clusters having association relationships therebetween. Each conversation target cluster includes at least two expressions. The third obtaining module 830 is configured to obtain a second expression associated with the first expression from the conversational graph based on the association relationships of expressions and the association relationships of conversational target clusters in the conversational graph. The generating module 840 is configured to generate a reply statement based on the second expression and the input statement.

According to a possible implementation of the disclosure, the third obtaining module 830 includes: a first obtaining unit, a first determining unit, and a second obtaining unit. The first obtaining unit is configured to obtain first candidate expressions associated with the first expression from the conversational graph based on the association relationships of expressions in the conversational graph. The first determining unit is configured to determine a second conversation target cluster based on an association relationship between a first conversation target cluster to which the first expression belongs and candidate conversation target clusters to which the candidate expressions belong. The second obtaining unit is configured to obtain the second expression associated with the first expression from the second conversation target cluster.

According to a possible implementation of the disclosure, the association relationships of expressions include directions of edges connecting the expressions and first weights of respective edges. The first obtaining unit is configured to: obtain the first candidate expressions from the conversational graph based on the directions and the first weights. Each first candidate expression corresponds to an edge pointing from the first expression to the first candidate expression, and the first weight of the edge is greater than a first threshold.

According to a possible implementation of the disclosure, the association relationships of expressions include directions of edges connecting the expressions. The first obtaining unit is configured to: obtain the first candidate expressions based on the directions and the number of edges. The direction of the edge between each first candidate expression and the first expression is from the first expression to the first candidate expression, and the number of edges corresponding to each first candidate expression is greater than a second threshold.

According to a possible implementation of the disclosure, the first obtaining unit is configured to: obtain second candidate expressions associated with the first expression from the conversational graph based on the association relationships of expressions; and obtain the first candidate expressions from the second candidate expressions based on the number of times of selecting each second candidate expression.

According to a possible implementation of the disclosure, the first determining unit is configured to: determine that the second conversation target cluster is the same as the first conversation target cluster based on the candidate conversation target cluster to which a first candidate expression belongs being the first conversation target cluster.

According to a possible implementation of the disclosure, the association relationships of conversation target clusters include directions of edges connecting the conversation target clusters and second weights of respective edges. The first determining unit is configured to: obtain the second conversation target cluster from the candidate conversation target clusters based on the direction of the edge connecting the first conversation target cluster and each candidate conversation target cluster and the second weight of the edge, the edge pointing from the first conversation target cluster to the second conversation target cluster, and the second weight of the edge being greater than a third threshold.

According to a possible implementation of the disclosure, the association relationships of conversation target clusters include directions of edges connecting the conversation target clusters and second weights of respective edges, each conversation target cluster corresponding to a conversation target. The first determining unit is configured to: determine a to-be-guided conversation target by recognizing the input statement; determine a third conversation target cluster based on a matching degree between the to-be-guided conversation target and each conversation target cluster in the conversational graph; and obtain the second conversation target cluster from the candidate conversation target clusters based on the direction of the edge between each candidate conversation target cluster and the third conversation target cluster and the second weight of the edge.

According to a possible implementation of the disclosure, the second obtaining module 820 includes: a word segmentation processing unit, and a second determining unit. The word segmentation processing unit is configured to obtain word segmentations of the input statement by performing word segmentation processing on the input statement. The second determining unit is configured to determine the first expression from the conversational graph based on an association degree between each word segmentation and each expression contained in the conversational graph.

According to a possible implementation of the disclosure, the second determining unit is configured to: obtain third candidate expressions from the conversational graph based on the association degree; and obtain the first expression from the third candidate expressions based on a similarity degree between each third candidate expression and the input statement.

According to a possible implementation of the disclosure, the apparatus may include: a fourth obtaining module, an extracting module, a determining module, and a clustering module. The fourth obtaining module is configured to obtain a conversational data set. The conversational data set includes groups of conversation. The extracting module is configured to extract expressions from the conversational data set. The determining module is configured to determine the association relationships between the expressions based on co-occurrence ways of every two expressions in a common group of conversation. The clustering module is configured to determine the conversation target clusters and the association relationships of conversation target clusters by clustering the expressions based on the association relationships of expressions.

According to a possible implementation of the disclosure, the extracting module includes: a third obtaining unit, and an extracting unit. The third obtaining unit is configured to obtain a syntax tree corresponding to each conversation contained in the conversational data set by parsing the conversation. The extracting unit is configured to extract an expression corresponding to each conversation from a root node of the syntax tree corresponding to the conversation.

It should be noted that, description for the above method for generating the conversation according to embodiments of the disclosure is also applicable to the apparatus for generating the conversation according to embodiments of the disclosure, which is not elaborated herein.

With the apparatus for generating the conversation according to the disclosure, the first expression corresponding to the input statement is obtained from the conversational graph. The conversational graph includes the expressions having the association relationships therebetween and the conversation target clusters having the association relationships therebetween. Each conversation target cluster includes the at least two expressions. The second expression associated with the first expression is obtained from the conversational graph based on the association relationships of expressions and the association relationships of conversational target clusters in the conversational graph. The reply statement is generated based on the second expression and the input statement. In this way, by using the conversational graph having the doble-layer structure (i.e., a layer of conversation target clusters and a layer of expressions), the reply statement is generated based on the association relationships of conversation target clusters and the association relationships of expressions, such that a generated conversation target is clear and controllable, and the conversation efficiency is improved.

According to embodiments of the disclosure, the disclosure also provides an electronic device and a readable storage medium.

As illustrated in FIG. 9, FIG. 9 is a block diagram illustrating an electronic device capable of implementing a method for generating a conversation according to embodiments of the disclosure. The electronic device aims to represent various forms of digital computers, such as a laptop computer, a desktop computer, a workstation, a personal digital assistant, a server, a blade server, a mainframe computer and other suitable computer. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the disclosure described and/or claimed herein.

As illustrated in FIG. 9, the electronic device includes: one or more processors 901, a memory 902, and interfaces for connecting various components, including a high-speed interface and a low-speed interface. Various components are connected to each other via different buses, and may be mounted on a common main board or in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if desired. Similarly, multiple electronic devices may be connected, and each device provides some necessary operations (for example, as a server array, a group of blade servers, or a multiprocessor system). In FIG. 9, a processor 901 is taken as an example.

The memory 902 is a non-transitory computer readable storage medium provided by the disclosure. The memory is configured to store instructions executable by at least one processor, to enable the at least one processor to execute the method for generating the conversation provided by the disclosure. The non-transitory computer readable storage medium provided by the disclosure is configured to store computer instructions. The computer instructions are configured to enable a computer to execute the method for generating the conversation provided by the disclosure.

As the non-transitory computer readable storage medium, the memory 902 may be configured to store non-transitory software programs, non-transitory computer executable programs and modules, such as program instructions/module (such as the first obtaining module 810, the second obtaining module 820, the third obtaining module 830, and the generating module 840 illustrated in FIG. 8) corresponding to the method for generating the conversation according to embodiments of the disclosure. The processor 901 is configured to execute various functional applications and data processing of the server by operating non-transitory software programs, instructions and modules stored in the memory 902, that is, implements the method for generating the conversation according to the above method embodiments.

The memory 902 may include a storage program region and a storage data region. The storage program region may store an application required by an operating system and at least one function. The storage data region may store data created according to predicted usage of the electronic device capable of implementing the method for providing the applet service capability. In addition, the memory 902 may include a high-speed random access memory, and may also include a non-transitory memory, such as at least one disk memory device, a flash memory device, or other non-transitory solid-state memory device. In some embodiments, the memory 902 may optionally include memories remotely located to the processor 901, and these remote memories may be connected to the electronic device via a network. Examples of the above network include, but are not limited to, an Internet, an intranet, a local area network, a mobile communication network and combinations thereof.

The electronic device capable of implementing the method for generating the conversation may also include: an input device 903 and an output device 904. The processor 901, the memory 902, the input device 903, and the output device 904 may be connected via a bus or in other means. In FIG. 9, the bus is taken as an example.

The input device 903 may receive inputted digital or character information, and generate key signal input related to user setting and function control of the electronic device capable of implementing the method for generating the conversation, such as a touch screen, a keypad, a mouse, a track pad, a touch pad, an indicator stick, one or more mouse buttons, a trackball, a joystick and other input device. The output device 904 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and generally interact via the communication network. A relationship between the client and the server is generated by computer programs operated on a corresponding computer and having a client-server relationship with each other.

According to the technical solution of embodiments of the disclosure, by using a conversational graph with a double-layer structure including a layer of conversation target clusters and a layer of expressions, a reply statement is generated based on association relationships of conversation target clusters and association relationships of expressions, such that a generated conversation target is clear and controllable, and the conversation efficiency is improved.

In the description of this specification, the terms "first" and "second" are only used for description purposes, and cannot be understood as indicating or implying relative importance or implicitly indicating the number of indicated technical features. Therefore, the features defined with "first" and "second" can include at least one of the features explicitly or implicitly. In the description of the disclosure, the term "multiple" means at least two, such as two, three, etc., unless otherwise specifically defined.

Although embodiments of the disclosure have been illustrated and described above, it may be understood that the above embodiments are exemplary and cannot be construed as limitations of the disclosure. The skilled in the art may make changes, modifications, substitutions and variations to the above embodiments within the scope of the disclosure.

## Claims

1. A method for generating a conversation, comprising:
obtaining (101) an input statement;
obtaining (102) a first expression corresponding to the input statement from a conversational graph, the conversational graph comprising expressions having association relationships therebetween and conversation target clusters having association relationships therebetween, and each conversation target cluster comprising at least two expressions;
obtaining (103) a second expression associated with the first expression from the conversational graph based on the association relationships of expressions and the association relationships of conversational target clusters in the conversational graph; and
generating (104) a reply statement based on the second expression and the input statement.

2. The method of claim 1, wherein obtaining (103) the second expression comprises:
obtaining (201) first candidate expressions associated with the first expression from the conversational graph based on the association relationships of expressions in the conversational graph;
determining (202) a second conversation target cluster based on an association relationship between a first conversation target cluster to which the first expression belongs and a respective candidate conversation target cluster to which each first candidate expression belongs; and
obtaining (203) the second expression associated with the first expression from the second conversation target cluster.

3. The method of claim 2, wherein the association relationships of expressions comprise directions of edges connecting the expressions and first weights of respective edges, and
wherein, obtaining (201) the first candidate expressions comprises:
obtaining the first candidate expressions from the conversational graph based on the directions and the first weights, each first candidate expression corresponding to an edge pointing from the first expression to the first candidate expression, and the first weight of the edge being greater than a first threshold.

4. The method of claim 2, wherein the association relationships of expressions comprise directions of edges connecting the expressions, and
wherein obtaining (201) the first candidate expressions comprises:
obtaining the first candidate expression based on the directions and the number of edges, the direction of the edge between each first candidate expression and the first expression being from the first expression to the first candidate expression, and the number of edges corresponding to each first candidate expression being greater than a second threshold.

5. The method of claim 2, wherein obtaining (201) the first candidate expressions comprises:
obtaining second candidate expressions associated with the first expression from the conversational graph based on the association relationships of expressions; and
obtaining the first candidate expressions from the second candidate expressions based on the number of times of selecting each second candidate expression.

6. The method of any one of claims 2 to 5, wherein the association relationships of conversation target clusters comprise directions of edges connecting the conversation target clusters and second weights of respective edges, and
wherein determining (202) the second conversation target cluster comprises:
obtaining the second conversation target cluster from the candidate conversation target clusters based on the direction of the edge connecting the first conversation target cluster and each candidate conversation target cluster and the second weight of the edge, the edge pointing from the first conversation target cluster to the second conversation target cluster, and the second weight of the edge being greater than a third threshold.

7. The method of any one of claims 2 to 5, wherein the association relationships of conversation target clusters comprise directions of edges connecting the conversation target clusters and second weights of respective edges, each conversation target cluster corresponding to a conversation target, and
wherein determining (202) the second conversation target cluster comprises:
determining (401) a to-be-guided conversation target by recognizing the input statement;
determining (402) a third conversation target cluster based on a matching degree between the to-be-guided conversation target and each conversation target cluster in the conversational graph; and
obtaining (403) the second conversation target cluster from the candidate conversation target clusters based on the direction of the edge between each candidate conversation target cluster and the third conversation target cluster and the second weight of the edge.

8. The method of any one of claims 1 to 7, wherein obtaining (101) the first expression comprises:
obtaining (501) word segmentations of the input statement by performing word segmentation processing on the input statement; and
determining (502) the first expression from the conversational graph based on an association degree between each word segmentation and each expression contained in the conversational graph.

9. The method of claim 8, wherein determining (502) the first expression based on the association degree comprises:
obtaining third candidate expressions from the conversational graph based on the association degree; and
obtaining the first expression from the third candidate expressions based on a similarity degree between each third candidate expression and the input statement.

10. The method of any of claims 1 to 6, further comprising:
obtaining (601) a conversational data set, the conversational data set comprising groups of conversation;
extracting (602) expressions from the conversational data set;
determining (603) the association relationships between the expressions based on co-occurrence ways of every two expressions in a common group of conversation; and
determining (604) the conversation target clusters and the association relationships of conversation target clusters by clustering the expressions based on the association relationships of expressions.

11. The method of claim 10, wherein extracting (602) the expressions comprises:
obtaining a syntax tree corresponding to each conversation contained in the conversational data set by parsing the conversation; and
extracting an expression corresponding to each conversation from a root node of the syntax tree corresponding to the conversation.

12. An apparatus (800) for generating a conversation, comprising:
a first obtaining module (810), configured to obtain an input statement;
a second obtaining module (820), configured to obtain a first expression corresponding to the input statement from a conversational graph, the conversational graph comprising expressions having association relationships therebetween and conversation target clusters having association relationships therebetween, and each conversation target cluster comprising at least two expressions;
a third obtaining module (830), configured to obtain a second expression associated with the first expression from the conversational graph based on the association relationships of expressions and the association relationships of conversational target clusters in the conversational graph; and
a generating module (840), configured to generate a reply statement based on the second expression and the input statement.

13. An electronic device, comprising:
at least one processor; and
a memory, communicatively coupled to the at least one processor,
wherein the memory is configured to store instructions executable by the at least one processor, and when the instructions are executed by the at least one processor, the at least one processor is caused to execute a method for generating a conversation of any one of claims 1 to 11.

14. A non-transitory computer readable storage medium, having computer instructions stored thereon, wherein the computer instructions are configured to cause a computer to execute a method for generating a conversation of any one of claims 1 to 11.

15. A computer program product, containing computer programs when executed on a processor, causing the processor to perform a method for generating a conversation of any one of claims 1 to 11.
